(19) Europäisches Patentamt

European Patent Office

Office européen des brevets

(11) **EP 1 083 150 A1**

(12) **EUROPEAN PATENT APPLICATION**

(43) Date of publication:
**14.03.2001 Bulletin 2001/11**

(51) Int. Cl.⁷: **C01C 1/04**

(21) Application number: **00203112.8**

(22) Date of filing: **08.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.09.1999 NL 1013016**

(71) Applicant:
**Continental Engineering B.v.
1096 CJ Amsterdam (NL)**

(72) Inventors:
• **De Wit, Jacobus Johannes
  1186 XZ  Amstelveen (NL)**
• **Riezebos, Arend
  1506 BM  Zaandam (NL)**

(74) Representative:
**Jorritsma, Ruurd et al
Nederlandsch Octrooibureau
Scheveningseweg 82
P.O. Box 29720
2502 LS Den Haag (NL)**

(54) **Process and apparatus for producing ammonia in a recycle circuit using ceramic membranes**

(57)    The invention relates to a process for producing ammonia in a recycle circuit stream which comprises at least hydrogen, nitrogen and at least a portion of the ammonia formed as a product, characterized in that the ammonia is abstracted from the recycle circuit stream by means of a membrane unit.

The invention further relates to an apparatus for producing ammonia in accordance with the process of any one of the preceding claims, said apparatus comprising at least a recycle circuit for allowing a recycle circuit stream to circulate, which recycle circuit effectively incorporates:

   a) at least one reactor provided with means for producing ammonia starting from hydrogen and nitrogen;
   b) at least one membrane unit provided with a membrane which is permeable at least to ammonia;
   c) means for feeding a feed stream into the recycle circuit (stream);
   d) means for abstracting a product stream from the recylce circuit (stream);
   e) optionally one or more elements, known per se, of a recycle circuit for preparing ammonia starting from a nitrogen- and hydrogen-containing feed;

said apparatus being characterized in that the membrane unit (b) is provided in such a way in the recycle circuit that the recycle circuit stream can be passed along one side of the membrane present in the membrane unit; and in that the means (c) for feeding the feed into the recycle circuit are connected to the membrane unit (b) in such a way that the feed can be passed along the other side of the membrane present in the membrane unit before the feed is fed into the recycle circuit.

EP 1 083 150 A1

**Description**

The present application relates to a process for producing ammonia, starting from a hydrogen- and nitrogen-containing feed, wherein

a) the feed is fed into a recycle circuit (stream), said recycle circuit comprising at least one reactor in which ammonia is formed from hydrogen and nitrogen;
b) the ammonia is abstracted from the recycle circuit stream leaving the reactor, after which the recycle circuit stream is again fed back to the reactor.

Synthetic ammonia has been produced since 1913. Natural gas, in addition to e.g. naphtha and bituminous coal (gas), is the most commonly used starting material.

In outline, the known industrial processes for producing ammonia consist of two parts, viz:

1) Preparation of synthesis gas:

This involves steam and a hydrocarbon compound (after desulphurization) being passed across a nickel catalyst. The catalyst is held in a tube which is placed in a furnace. Inside, the endothermal "steam reforming" reactions take place, according to the following reactions:

$$CH_4 + 2H_2O \rightarrow CO_2 + 4H_2$$

$$CH_4 + H_2O \rightarrow CO + 3H_2$$

The supply of reaction heat is effected by the combustion of natural gas. The methane content is further reduced by partial oxidation with oxygen, methane being converted into $CO$ and $CO_2$. At the same time, in this step, the required nitrogen is added to the gas mixture by air being added. In the next steps $CO$ and $CO_2$ are removed from the gas mixture. Any residual $CO$ and/or $CO_2$ can, if required, be converted into methane in a methanization step.

2) Synthesis of ammonia:

In this part of the process, the eventual synthesis of $NH_3$ from $N_2$ and $H_2$ takes place. The gas stream at the synthesis reactor outlet still contains large quantities of $H_2$ and $N_2$. By means of cooling, $NH_3$ is condensed and removed. The residual-gas stream is recycled to the compression stage (synthesis circuit). Accumulated inerts are eliminated via a purge stream.

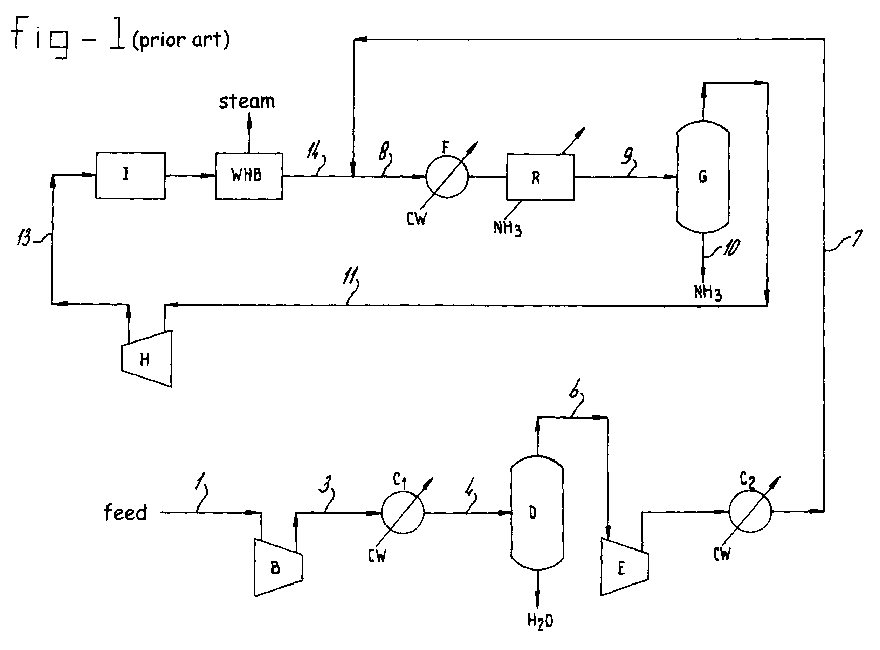

A recycling process of this type for prior art ammonia synthesis is schematically outlined in Figure 1, with the following legend:

- B,E     first and second stage, respectively, of the synthesis gas compressor
- C,F     cooling-water condensers
- D,G     knock-out drums
- H     recirculation compressor
- I     ammonia reactor
- WHB     heat recovery
- R     ammonia chiller

The feed gas (1) is pressurized (3) with the aid of the first stage of the synthesis gas compressor (B) and then cooled in the cooling-water condenser ($C_1$). The condensed water is separated in a knock-out drum (D). The feed gas is then pressurized to synthesis pressure (7) by means of the second stage of the synthesis gas compressor (E) and is cooled by means of cooling water ($C_2$).

The feed gas is then introduced into the recycle circuit, upstream of the cooling-water condenser (F), where it is mixed with the reactor product (14). This ammonia-rich mixture is then partially condensed (9) by means of cooling-water condenser (F) and chiller (R). With the aid of the knock-out drum (G), the condensed ammonia is separated (10). The remaining uncondensed vapour (11) is compressed to synthesis pressure (13) in the recirculation compressor.

This feed gas is then converted to ammonia in the reactor (I). Heat is recovered with the aid of a steam boiler (WHB). This completes the cycle.

The conversion of hydrogen and nitrogen into ammonia in the synthesis circuit of an ammonia plant, however, is a reaction with a low conversion rate. The unreacted starting materials are recycled to increase the efficiency.

The most important developments to occur since the 60s/70s in this context are:

- larger production units;
- development of improved catalysts;
- low-temperature CO conversion;
- more efficient $CO_2$ removal systems;
- use of centrifugal compressors;
- use of reactors with internal cooling;
- improved insight into energy management;
- reductions in the steam/carbon ratio in the reforming step.

As a result of all these developments, the energy consumption, which in the 60s was at a level of about 40 GJ/t of product, was reduced in the 90s to below 30 GJ/t of product, thereby almost reaching the limits of present-day technology.

It is known to use ammonia selective separation membranes in the production of ammonia. In US 5,455,016 it is described that the recycle stream is passed over a membrane. A ammonia enriched permeate stream is obtained, which is fed to the effluent of the ammonia reactor. The non-permeate stream, enriched in hydrogen, nitrogen and inert gasses is combined with the feed.

US 4,762,535 and Tricoli V., Journal of Membrane Science, vol. 104, no. 1/02, 1995, p. 19-26 describe specific membranes that can be used for definitively removing ammonia from the recycle stream.

It is an object of the invention to provide an improved process for producing ammonia, especially for industrially producing ammonia. More particularly it is an object of the invention further to reduce the energy consumption of the ammonia synthesis, compared with the known industrial processes.

According to the invention, this is achieved by the recycle circuit stream being brought into contact with/being passed along a side of a membrane which is at least permeable to ammonia, the ammonia passing through the membrane and thus being abstracted from the recycle circuit stream. In the process, the ammonia is absorbed into a second phase which is in contact with/passed along the other side of the membrane, said phase becoming ammonia-enriched in the process. Used as said second phase according to the invention is, in particular, the hydrogen- and nitrogen-containing feed which (ultimately) is fed into the recycle circuit stream or alternatively a gas stream which (ultimately) is used to form/compose said feed.

As a result of this, ammonia is transferred from the recycle circuit stream to the feed which (ultimately) is fed into the recycle circuit stream. As a result it is possible, inter alia, to reduce the size of the recycle circuit stream, thus allowing energy savings to be obtained with respect to the impeller of the feed gas compressor and to the cooling compressor. Further advantages of the invention will emerge from the following description.

The invention therefore, in a first aspect, relates to a process for producing ammonia, starting from a hydrogen- and nitrogen-containing feed, wherein

a) the feed is fed into a recycle circuit (stream), said recycle circuit comprising at least one reactor in which ammonia is formed from hydrogen and nitrogen;

b) the ammonia is abstracted from the recycle circuit stream leaving the reactor, after which the recycle circuit stream is fed back to the reactor,

said process being characterized in that

c) the recycle circuit also incorporates a membrane unit provided with a membrane which is permeable at least to ammonia, the recycle circuit stream being passed through the membrane unit on one side of the membrane and the feed being passed through the membrane unit on the other side of the membrane in such a way that at least ammonia from the recycle circuit stream is incorporated into the feed.

Although in the present specification it is described that a "hydrogen- and nitrogen-containing feed" is passed along the membrane, the present invention also involves passing a nitrogen containing or hydrogen containing stream along the membrane as a sweep gas. In a next step the ammonia enriched nitrogen or hydrogen containing stream can be combined with a hydrogen or nitrogen stream, respectively, to obtain a suitable feed stream containing nitrogen and hydrogen in the correct ratio.

In a second aspect, the invention relates to an apparatus suitable for carrying out the above process, said apparatus comprising at least a recycle circuit for allowing a recycle circuit stream to circulate, which recycle circuit effectively incorporates:

a) at least one reactor provided with means for producing ammonia starting from hydrogen and nitrogen;

b) at least one membrane unit provided with a membrane which is permeable at least to ammonia;

c) means for feeding a feed (stream) into the recycle circuit (stream);

d) means for abstracting a product (stream) from the recycle circuit (stream);

e) optionally one or more elements, known per se, of a recycle circuit for preparing ammonia starting from a nitrogen- and hydrogen-containing feed;

said apparatus being characterized in that the membrane unit (b) is provided in such a way in the recycle circuit that the recycle circuit stream can be passed along one side of the membrane present in the membrane unit; and in that the means (c) for feeding the feed into the recycle circuit are connected to the membrane unit (b) in such a way that the feed can be passed along the other side of the membrane present in the membrane unit before the feed is fed into the recycle circuit.

The reactor (a), the membrane unit (b), the means (c) and (d) and the optional further elements (e) are effectively incorporated in the recycle circuit. In general, this is meant to indicate that the reactor (a), the membrane unit (b), the means (c) and (d) and the optional further elements (e) are connected to one another in such a way that a recycle circuit stream can be made to circulate through the reactor (a), the membrane unit (b) and the optional further elements (e).

To this end, the further elements (e) will, as a rule, comprise at least one pump or compressor, preferably a compressor, to recirculate the recycle circuit stream. Other elements known per se of recycle circuits for the synthesis of ammonia which can be used in the invention as elements (e) are, for example, condensers, chillers, knock-out drums (for example to separate ammonia from the recycle circuit stream), compressors and heat exchangers.

The term "effectively incorporated in the recycle circuit" is further meant to indicate that means (c) and (d) can be used, respectively, to feed a feed (stream) into the circulating recycle circuit stream or, alternatively, to abstract a product stream from the circulating recycle circuit stream. In this context, the feed stream fed into the recycle circuit stream by means of means (c) will at least comprise hydrogen and nitrogen, and the product stream abstracted from the recycle circuit stream by means of means (d) will comprise at least part of the ammonia formed in the reactor (a). It will be evident to those skilled in the art that for this purpose some of the abovementioned elements (e) can also form part of the means (c) for feeding in the feed stream and/or of the means (b) for abstracting the product stream, and vice versa.

In further aspects, the invention relates to the ammonia formed in accordance with the invention and to the use of a membrane unit for removing ammonia from a recycle circuit stream for the synthesis of ammonia from a hydrogen- and nitrogen-containing feed, i.e. from a recycle process as described herein.

Apart from the use of the membrane unit, the process according to the invention will be operated in essentially the same manner as the known prior-art recycle processes, using essentially identical equipment and identical conditions. This has the advantage that the existing recycle processes can be adapted in a relatively simple manner to make use of the invention.

The reactor (a) will, as a rule, comprise means for producing ammonia starting from nitrogen and hydrogen, said means being enclosed in an essentially closed (pressure) vessel provided with suitable feed and offtake lines. The means can comprise one or more catalytic components suitable for producing ammonia from hydrogen and nitrogen, and these will be evident to those skilled in the art. Suitable examples include, inter alia, iron- and/or ruthenium-based catalysts, which generally will be present in combination with a suitable support, for example in the form of a catalyst bed.

The reactor can further include all elements known per se of ammonia reactors, such as heating elements, measuring and control equipment, and the like.

The formation of ammonia in the reactor will be carried out under conditions known per se, depending on factors such as the catalyst employed, the feed employed, the composition of the recycle circuit stream and the desired throughput. A suitable choice from among these conditions will be possible to those skilled in the art, for example comprising a pressure of from 60 bar to 600 bar and a temperature of from 200°C to 600°C.

The feed at least comprises hydrogen and nitrogen, in amounts suitable for producing ammonia, the hydrogen/nitrogen ratio as a rule being between 1.5 and 3.5. In this context, the feed can be essentially the same as the feeds used in known recycle processes. The feed can be obtained by producing nitrogen and hydrogen separately and by subsequently mixing them in the right amounts to obtain the above hydrogen/nitrogen ratio. In this case it is also possible, instead of the total feed, to pass the hydrogen or nitrogen stream separately along the membrane to incorporate the ammonia. In a next step this ammonia enriched stream can be combined with either hydrogen or nitrogen to form a feed gas.

Preferentially, use is made of a feed based on synthesis gas containing hydrogen obtained as described hereinabove, for example from natural gas, oil, bituminous coal or naphtha; and a sufficient amount of nitrogen, for example obtained from/in the form of air. These and other suitable feeds will be obvious to those skilled in the art.

A non-limiting example of a suitable feed which is fed into the synthesis gas circuit comprises, for example:

| - hydrogen (from synthesis gas): | 50-80 volume% |
|---|---|
| - nitrogen (from air): | 20-40 volume% |
| - further components*: | 0-5 volume% |

*including methane, argon, helium.

The recycle circuit stream will as a rule contain essentially all the components of the feed and in addition (at least part of) the ammonia formed in the reactor. The specific quantities of each component will depend on the time in the cycle. The feed as well as the recycle circuit stream will as a rule be gaseous.

The membrane unit (b) will as a rule consist of an essentially closed (pressure) vessel which is provided with at least one membrane, which divides the membrane unit into at least two essentially separate "compartments" (possibly linked to the wall(s) and/or further structural elements of the (pressure) vessel and/or further membranes present), each "compartment" being suitably provided with independent feed and offtake lines.

The membrane can be of any suitable shape and size and, for example, can be a planar membrane, a spirally wound membrane, a tubular membrane, a hollow-fibre membrane (or an assembly thereof), or a "plate-and-frame" module. The total surface area of the membrane(s) will depend on factors such as the recirculation rate of the recycle circuit stream and the amount of ammonia to be removed per unit time. Suitable designs for the membrane unit will be obvious to those skilled in the art.

The membrane used according to the invention is at least permeable to ammonia and preferably slightly permeable or essentially impermeable to other components of the reaction mixture. For this purpose, use is made especially of membranes like those employed in so-called "permeatic" processes and/or membrane separation processes, for example polymer (organic) membranes or ceramic membranes which can be tight or porous. For a more detailed description of such "permeation membranes" reference is made to the known handbooks such as Perry's Chemical Engineers' Handbook, 7th Edition, McGraw Hill, 1997, Section 22-61 to 22-67 inclusive.

Preferentially, use is made of a porous ceramic membrane, i.e. having a suitable pore size and thickness, which will be obvious to those skilled in the art. Preference is given to pore sizes in the range of from 0.5 nanometre to 1 micrometre, and a thickness of the membrane in the range of from 1 to 5 mm.

Examples of suitable membranes include ceramic membranes of e.g. silica or silica/alumina, silicalite (HZSM5); silicalite/ZSM5 zeolite; zeolite A/X (e.g. A4/A5, X13) and palladium-containing ceramic materials; as well as carbon membranes and membranes of sintered stainless steel. Membrane materials of this type can further be modified in a manner known per se, for example by ion exchange (e.g. sodium against copper etc.), by surface treatment and the like. Examples of these and other suitable membranes will be obvious to those skilled in the art, reference again being made in this respect to the description of membrane separation processes from the known handbooks.

During operation, the recycle circuit stream is passed along one side of the membrane (i.e. through a first "compartment"), while the feed stream is passed along the other side of the membrane (i.e. through a second, opposite "compartment"). In so doing, a pressure differential is preferably maintained across the membrane, for example in the range of between 25 and 350 bar, in particular in the range of between 25 and 200 bar, the recycle circuit side forming the "high-pressure side" and the feed side forming the "low-pressure side". Thus the pressure of the recycle circuit stream which is fed to the membrane unit can be between 60 and 600 bar, while the pressure of the feed stream fed to the membrane unit can be between 25 and 150 bar.

The membrane unit will further, as a rule, be operated at a temperature of between -10°C and 100°C. Very preferably, the membranes used in the process are suitable for use at such temperatures and pressure differentials and will also be resistant to the components of the recycle circuit stream and the feed stream.

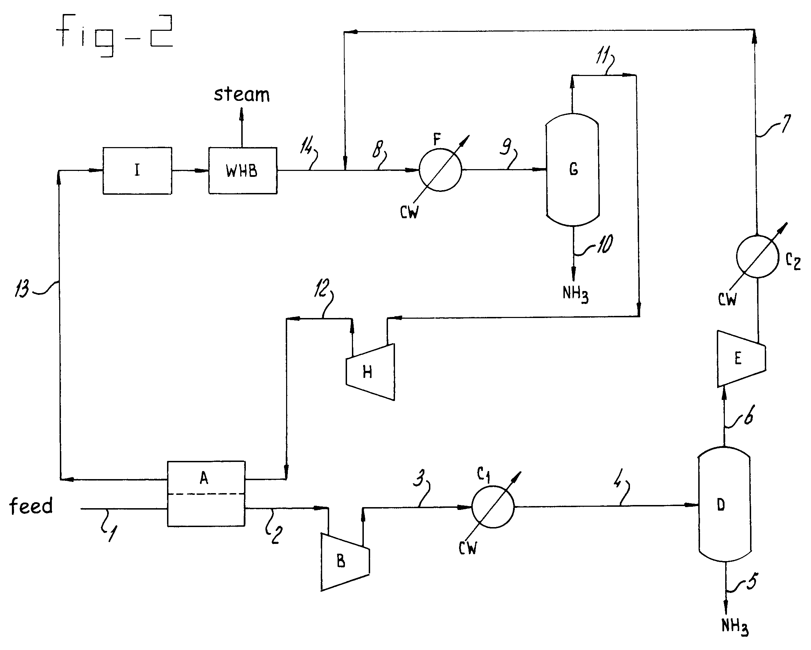

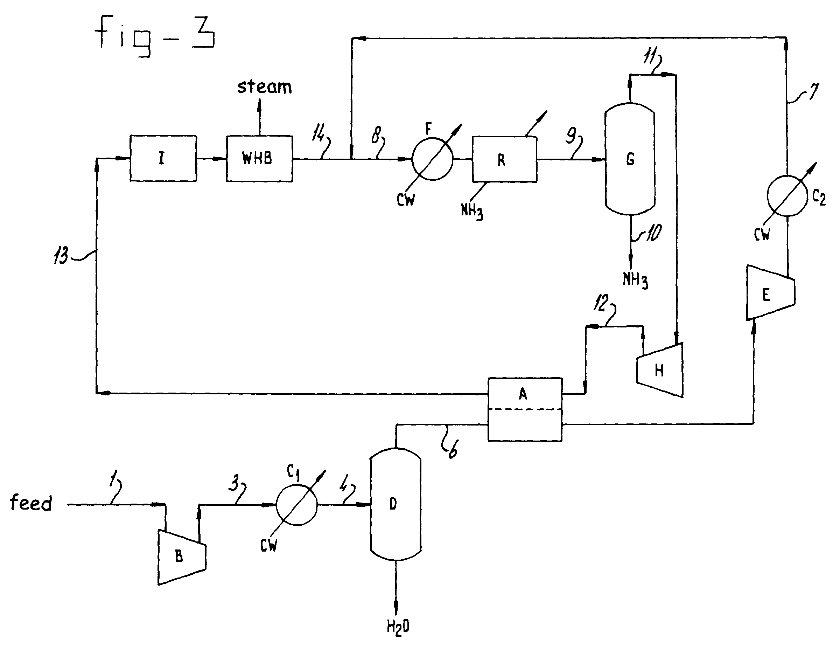

The means (c) for feeding the feed into the recycle circuit will, as a rule, comprise one or more conduits which at one end debouch into the recycle circuit and at the other end are connected to a source of hydrogen and a source of nitrogen. Also incorporated in these conduits can be one or more compressors, knock-out drums, condensers and the like which, in such an arrangement, also form part of the means (c). The conduits are also effectively connected to the membrane unit (b) in such a way that the feed can be passed through the membrane unit before being fed into the recycle circuit. In such an arrangement, the membrane unit can be incorporated in the feed arrangement at any suitable location, for example upstream of the optional compression of the feed (see Figure 2) or, for example, downstream of a first, initial compression step and upstream of a second compression step (see Figure 3).

The invention will now be explained with reference to the non-limiting description following hereinafter and to the non-limiting examples below and also with reference to the non-limiting Figures 2 and 3 which provide a schematic overview of two examples of apparatuses according to the invention, with the following legend:

A      a membrane unit (b), provided with a membrane;
B,E      first and second stage, respectively, of synthesis gas compressor;
C,F      cooling water condensers;
D,G      knock-out drums;
H      recirculation compressor;
I      ammonia reactor (a);
WHB      heat recovery;
R      ammonia chiller.

Furthermore, the term "recycle gas" in the present description, the examples and the claims refers, in the general sense, to the gas mixture circulating in the recycle circuit. This mixture will at least contain hydrogen, nitrogen and also at least part of the ammonia formed, depending on the location in the recycle circuit.

The term "feed gas" in the general sense refers to the gas stream which is fed into the recycle circuit. This gas mixture will likewise (at the time of entering the recycle circuit) at least contain hydrogen and nitrogen.

Finally, the term "synthesis gas" in the general sense refers to a gas mixture which at least contains hydrogen and nitrogen and from which ammonia is or can be produced, i.e. in the process according to the invention. The term synthesis gas therefore can comprise both the recycle gas and the feed gas, depending on the context in which it is used herein.

The invention is based, inter alia, on ammonia-containing gas after cooling and chilling being supplied to the high-pressure side (or retentate side) of a membrane in membrane unit (A). At the low-pressure side (or permeate side) of the membrane the feed gas for the recycle circuit stream is supplied. The action of the membrane ensures that ammonia diffuses through the membrane. As a result, the retentate gas is depleted of ammonia. This results in a lower ammonia concentration in the recycle circuit stream at the inlet of the reactor (I). Given a constant catalyst volume, this will therefore result in increased production, causing a decrease in (the volume of) the recycle circuit stream. As a result, the delivery of the recirculation compressor will decrease and the load on the ammonia cooling compressor will be relieved. Additionally, the gas mixture on the permeate side will become ammonia-richer. Owing to this increased concentration, the dew-point of the gas mixture will be shifted to a higher temperature, causing a higher output of the water condenser - this generally referring to a substantially larger portion of the ammonia being condensed in the water condenser, causing a reduced load to the cooling compressor - and again relieving the load on the cooling compressor.

As shown in Figure 2, the feed gas, obtained from the synthesis gas production plant, is supplied via stream (1) to the ceramic membrane at the permeate side. Via the recirculation compressor (H), recycle gas is supplied (12) at the high pressure side of the membrane (A). To keep the mean partial differential pressure as high as possible, it will be greatly preferred for the two streams to flow past one another countercurrently, at least not entirely cocurrently. Owing to the partial differential pressure, ammonia will, via capillary condensation, diffuse through the membrane (A) from the retentate side to the permeate side, the feed gas being used as a sweep gas to keep the partial pressure of ammonia on the permeate side as low as possible.

The ammonia-enriched feed gas (2) is pressurized (3) with the aid of the first stage of the synthesis gas compressor (B) and is then cooled in the cooling-water condenser (C). The condensed ammonia (4) is separated off in a knock-out drum (D). The ammonia-depleted feed gas (6) is then pressurized to synthesis pressure (7) by means of the second stage of the synthesis gas compressor (E).

The feed gas is then introduced into the recycle circuit, upstream of the cooling-water condenser (F), where it is mixed with the converter effluent. Said ammonia-rich mixture is then partially condensed (9), using cooling-water condenser (F) and (optionally, see Figure 3) chiller (R). With the aid of the knock-out drum (G) the condensed ammonia is separated off (10). The remaining uncondensed vapour (11) is compressed to synthesis pressure (12) in the recirculation compressor (H) and then continues on its route to the retentate side of the membrane. In the membrane a considerable portion of the ammonia then diffuses to the permeate side. The result is an ammonia-depleted retentate stream (13) from the membrane unit (A) which is fed to the reactor (I).

This feed gas is then converted to ammonia in the reactor/heat recovery installation (14). This ammonia-enriched gas is then mixed with the feed gas (7), thus completing the cycle.

One of the major cost items in the synthesis circuit is the cooling compressor (R) for the purpose of removing ammonia from the ammonia synthesis circuit. In a typical ammonia circuit arrangement according to the prior art (shown in Figure 1) the reactor product is cooled to 0°C or below (-20°C), depending on the operating pressure selected in the evaporator (R). In the process, most of the ammonia condenses, then being separated off in a knock-out drum (G).

The membrane configuration according to the invention provides a different approach for removing ammonia, with the advantage that the delivery of the cooling compressor decreases, on the one hand, because the water condenser is able to supply a proportionately larger portion of the total cooling capacity required, and on the other hand because the amount of circulating gas decreases, requiring less cooling as a result. In this membrane configuration the cooling compressor could possibly be dispensed with. The major fraction of the ammonia is condensed with the aid of inexpensive cooling water (condenser F). The remainder of the ammonia is removed from the recycle circuit by means of the membrane configuration and is then cooled with cooling water (condenser C). The condensed ammonia is then separated off in a knock-out drum. This provides the advantages that the cooling compressor could be dispensed with and/or that the recirculation stream can be considerably reduced, owing to the greater conversion per recirculation cycle. As a result, the required delivery for the recirculation compressor decreases by about 25%.

In other words, according to the invention the feed enters the reactor at a lower ammonia concentration: consequently the process according to the invention can be operated with a smaller recycle circuit stream volume, as a result of which the delivery required for the impeller (the recirculation compressor) can be lower.

A further advantage of the smaller recycle circuit stream volume is that a higher degree of cooling can be achieved with the existing water cooling arrangement. As a result, the cooling compressor can be operated at a lower load or even be dispensed with entirely.

One consequence of the membrane configuration is the considerable increase in the delivery of the synthesis gas compressor. This is because the feed stream increases with the amount of diffused ammonia. The total delivery, however, and therefore also the energy consumption of the synthesis gas compressor, the recirculation compressor and the cooling compressor is about 10% less, compared with the conventional synthesis circuit without a membrane.

Examples

In the examples, the invention is compared with a conventional synthesis loop according to the prior art, including the cooling system. The feed, stream 1, is the same in all cases, viz:

| Component | t/h |
|-----------|-----|
| $CH_4$ | 329 |
| $H_2$ | 10281 |
| $N_2$ | 47675 |
| Ar | 820 |
| $H_2O$ | 370 |
| $NH_3$ | 0 |
| Total | 59475 |

Example 1

The prior art compared with the installation of a membrane upstream of the synthesis gas compressor, as shown in Figure 2. The product streams are as follows:

| Component | Prior art (t/h) | Invention (t/h) | | |
|-----------|-----------------|-----------------|-----------|-------|
| | stream 10 | stream 5 | stream 10 | Total |
| $CH_4$ | 102 | 6 | 41 | 47 |
| $H_2$ | 25 | 15 | 13 | 28 |
| $N_2$ | 160 | 102 | 88 | 190 |
| Ar | 150 | 21 | 46 | 67 |
| $H_2O$ | 66 | 370 | 0 | 370 |
| $NH_3$ | 56193 | 38648 | 17090 | 55738 |
| Total | 56696 | 39162 | 17278 | 56440 |

The energy consumption is as follows:

| Electricity | | |
|---|---|---|
| Apparatus | Prior art (kW) | Invention (kW) |
| Synthesis gas compressor (B+E) | 11965 | 15833 |
| Recirculation compressor (H) | 2588 | 1904 |
| Cooling compressor (R) | 5164 | - |
| Total | 19717 | 17737 |
| Steam production | | |
| After reactor (I) | -32688 | -36037 |
| Cooling water consumption | | |
| After synthesis gas compressor (C) | 11914 | 32090 |
| In synthesis circuit (F) | 9271 | 7910 |
| Cooling system (R) | 29860 | 0 |
| Total | 51045 | 40000 |

Example 2

The prior art compared with the installation of the membrane between the first and second stage of the synthesis gas compressor, as shown in Figure 3. The product streams are as follows:

| Component | Prior art (t/h) | Invention (t/h) |
|---|---|---|
| | stream 10 | stream 10 |
| $CH_4$ | 102 | 102 |
| $H_2$ | 25 | 25 |
| $N_2$ | 160 | 160 |
| Ar | 150 | 151 |
| $H_2O$ | 66 | 66 |
| $NH_3$ | 56193 | 56196 |
| Total | 56696 | 56700 |

The energy consumption is as follows:

| Electricity | | |
| --- | --- | --- |
| Apparatus | Prior art (kW) | Invention (kW) |
| Synthesis gas compressor (B+E) | 11965 | 12132 |
| Recirculation compressor (H) | 2588 | 2265 |
| Cooling compressor (R) | 5164 | 5134 |
| Total | 19717 | 19531 |
| Steam production | | |
| After reactor (I) | -32688 | -34029 |
| Cooling water consumption | | |
| After synthesis gas compressor (C) | 11914 | 12145 |
| In synthesis circuit (F) | 9271 | 7916 |
| Cooling system (R) | 29860 | 29734 |
| Total | 51045 | 49795 |

**Claims**

1. Process for producing ammonia in a recycle circuit stream which comprises at least hydrogen, nitrogen and at least a portion of the ammonia formed as a product, characterized in that the ammonia is abstracted from the recycle circuit stream by means of a membrane unit.

2. Process according to Claim 1, <u>characterized</u> in that the ammonia abstracted from the recycle circuit stream in the membrane unit is incorporated in a hydrogen- and nitrogen-containing feed which is fed into the recycle circuit stream.

3. Process for producing ammonia, starting from a hydrogen- and nitrogen-containing feed, wherein

> a) the feed is fed into a recycle circuit (stream), said recycle circuit comprising at least one reactor in which ammonia is formed from hydrogen and nitrogen;
> b) the ammonia is abstracted from the recycle circuit stream leaving the reactor, after which the recycle circuit stream is fed back to the reactor,
> said process being characterized in that
> c) the recycle circuit also incorporates a membrane unit provided with a membrane which is permeable at least to ammonia, the recycle circuit stream being passed through the membrane unit on one side of the membrane and the feed being passed through the membrane unit on the other side of the membrane in such a way that at least ammonia from the recycle circuit stream is incorporated into the feed.

4. Process according to any one of the preceding claims, wherein the membrane is a ceramic membrane.

5. Process according to any one of the preceding claims, wherein the reactor at least comprises a catalytic component which is suitable for producing ammonia from nitrogen and hydrogen, optionally combined with a suitable support.

6. Process according to any one of the preceding claims, wherein the formation of ammonia in the reactor is carried out under conditions which comprise a pressure of from 60 to 600 bar, and a temperature of from 200°C to 600°C.

7. Process according to any one of the preceding claims, wherein during step (c) a pressure differential across the membrane is maintained, the recycle circuit stream side forming the high-pressure side and the feed side forming the low-pressure side.

8. Process according to Claim 7, wherein a pressure differential of between 25 and 350 bar, preferably from 25 to 200 bar is maintained.

9. Process for producing ammonia, starting from a hydrogen- and nitrogen-containing feed, wherein

a) the feed is fed into a recycle circuit (stream), said recycle circuit comprising at least one reactor in which ammonia is formed from hydrogen and nitrogen;
b) the ammonia is abstracted from the recycle circuit stream leaving the reactor, after which the recycle circuit stream is fed back to the reactor,
said process being characterized in that
c) the recycle circuit also incorporates a membrane unit provided with a membrane which is permeable at least to ammonia, the recycle circuit stream being passed through the membrane unit on one side of the membrane and a hydrogen- or nitrogen containing stream being passed through the membrane unit on the other side of the membrane in such a way that at least ammonia from the recycle circuit stream is incorporated into the hydrogen- or nitrogen-containing stream, which ammonia enriched hydrogen- or nitrogen-containing stream is then combined with nitrogen or hydrogen, respectively, to obtain the hydrogen-and nitrogen-containing feed.

10. Apparatus for producing ammonia in accordance with the process of any one of the preceding claims, said apparatus comprising at least a recycle circuit for allowing a recycle circuit stream to circulate, which recycle circuit effectively incorporates:

a) at least one reactor provided with means for producing ammonia starting from hydrogen and nitrogen;
b) at least one membrane unit provided with a membrane which is permeable at least to ammonia;
c) means for feeding a feed stream into the recycle circuit (stream);
d) means for abstracting a product stream from the recycle circuit (stream);
e) optionally one or more elements, known per se, of a recycle circuit for preparing ammonia starting from a nitrogen- and hydrogen-containing feed;

said apparatus being characterized in that the membrane unit (b) is provided in such way in the recycle circuit that the recycle circuit stream can be passed along one side of the membrane present in the membrane unit; and in that the means (c) for feeding the feed into the recycle circuit are connected to the membrane unit (b) in such a way that the feed can be passed along the other side of the membrane present in the membrane unit before the feed is fed into the recycle circuit.

11. Apparatus according to Claim 10, wherein the membrane is a ceramic membrane.

12. Apparatus according to Claim 10 or 11, wherein the means for producing ammonia starting from hydrogen and nitrogen in reactor (a) comprise at least one catalytic component, optionally combined with a suitable support.

13. Apparatus according to any one of Claims 10-12, wherein the elements (e) comprise at least one compressor for circulating the recycle circuit stream and optionally one or more further elements selected from condensers, chillers, knock-out drums and/or heat exchangers.

14. Apparatus according to any one of Claims 10-13, wherein the means (c) for feeding the feed into the recycle circuit comprise one or more conduits which

a) at one end debouch into the recycle circuit and at the other end are connected to a source of hydrogen and a source of nitrogen, and which
b) are effectively connected to the membrane unit (b) in such a way that the feed can be passed through the membrane unit before being fed into the recycle circuit;

the means (c) optionally also comprising one or more compressors, knock-out drums, condensers and the like, also effectively connected to the one or more conduits and the membrane unit.

15. Apparatus according to Claim 14, wherein the means (c) comprise at least one compression stage and wherein membrane unit (b) is connected in such a way to means (c) that the feed stream can be fed into the membrane unit (c) upstream of the compression stage.

16. Apparatus according to Claim 15, wherein the means (c) comprise at least two compression stages and wherein membrane unit (b) is connected to means (c) in such a way that the feed stream can be fed into the membrane unit (c) downstream of at least the first compression stage and upstream of at least the last compression stage.

17. Use of a membrane unit for removing ammonia from a recycle circuit stream for the synthesis of ammonia from a hydrogen- and nitrogen-containing feed.

18. Ammonia obtained via a process of any one of Claims 1-9, by using an apparatus according to any one of Claims 10-16 or via the use of Claim 17.

Fig – 1 (prior art)

feed

B

$C_1$ CW

D $H_2O$

E

$C_2$ CW

WHB steam

I

H

R $NH_3$

F CW

G $NH_3$

EP 1 083 150 A1

## Fig-2

fig-3

**European Patent Office**

**EUROPEAN SEARCH REPORT**

Application Number

EP 00 20 3112

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 455 016 A (CHOE JUN S ET AL) 3 October 1995 (1995-10-03) * column 2, line 53 - column 3, line 24; claims; figure 1 * | 1,17,18 | C01C1/04 |
| X | US 4 762 535 A (PEZ GUIDO P ET AL) 9 August 1988 (1988-08-09) * claim 13 * | 1,17,18 | |
| X | TRICOLI V ET AL: "AMMONIA SELECTIVE HOLLOW FIBERS" JOURNAL OF MEMBRANE SCIENCE,NL,ELSEVIER SCIENTIFIC PUBL.COMPANY. AMSTERDAM, vol. 104, no. 1/02, 15 August 1995 (1995-08-15), pages 19-26, XP000546993 ISSN: 0376-7388 * figure 1.B * | 1,17,18 | |
| A | "MEMBRANE SEPARATION OF AMMONIA" NITROGEN,GB,BRITISH SULPHUR CO, LONDON, no. 198, 1 July 1992 (1992-07-01), page 40 XP000292989 ISSN: 0029-0777 * right-hand column, paragraph 2 * | 5 | TECHNICAL FIELDS SEARCHED (Int.Cl.7) C01C |
| A | US 4 180 553 A (NULL HAROLD R ET AL) 25 December 1979 (1979-12-25) | | |

The present search report has been drawn up for all claims

| Place of search | Date of completion of the search | Examiner |
|---|---|---|
| THE HAGUE | 18 December 2000 | Zalm, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**     EP 00 20 3112

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2000

| Patent document cited in search report | | Publication date | Patent family member(s) | | Publication date |
|---|---|---|---|---|---|
| US 5455016 | A | 03-10-1995 | NONE | | |
| US 4762535 | A | 09-08-1988 | CA | 1304697 A | 07-07-1992 |
| | | | DE | 3851367 D | 13-10-1994 |
| | | | DE | 3851367 T | 19-01-1995 |
| | | | EP | 0293737 A | 07-12-1988 |
| | | | JP | 1983056 C | 25-10-1995 |
| | | | JP | 7005297 B | 25-01-1995 |
| | | | JP | 63310719 A | 19-12-1988 |
| | | | MX | 163704 B | 15-06-1992 |
| US 4180553 | A | 25-12-1979 | NONE | | |

EPO FORM P0459

For more details about this annex : see Official Journal of the European Patent Office, No. 12/82